# FASCICULE DE BREVET EUROPEEN

(11) **EP 0 461 056 B1**
(45) Date de publication et mention de la délivrance du brevet: **26.04.1995**
(21) Numéro de dépôt: 91440046.0
(22) Date de dépôt: 05.06.1991
(51) Int. Cl.: A01D 75/20, A01B 59/04, B60D 1/30

(54) **Machine agricole comportant deux organes liés entre eux au moyen d'une articulation protégée**
Landwirtschaftliche Maschine versehen mit zwei Elementen, die mittels eines geschützten Gelenkes miteinander verbunden sind
Agricultural machine comprising two elements connected by a protected joint

(30) Priorité: 06.06.1990 FR 9007208
(43) Date de publication de la demande: 11.12.1991
(73) Titulaire: KUHN S.A., F-67700 Saverne (FR)
(72) Inventeur: Gantzer, Jean-Paul, F-57820 Dannelbourg (FR)

(56) Documents cités:
- DE-A- 3 701 369
- DE-B- 1 092 245
- DE-B- 1 184 135
- FR-A- 2 142 103
- GB-A- 2 013 830
- US-A- 2 612 763
- US-A- 3 266 818
- US-A- 3 837 677

## Description

La présente invention concerne une machine agricole comportant :
a) un premier et un deuxième organe liés entre eux au moyen d'une articulation autorisant une rotation entre ces deux organes, cette rotation étant limitée dans au moins un sens par une butée liée au premier organe et destinée à venir en contact avec le deuxième organe ;
   et
b) un dispositif de protection isolant ladite butée et ne se déformant pas lors de ladite rotation.

Il est connu dans l'état de la technique (DE-B-1 184 135) une machine agricole comportant un timon lié au châssis de celle-ci, ou plus précisément à un boîtier de réglage de ce dernier, par l'intermédiaire d'une articulation autorisant une rotation entre ledit timon et ledit boîtier de réglage. Le boîtier de réglage est de forme trapézoïdale et est constitué d'une plaque supérieure et d'une plaque inférieure sensiblement horizontales faisant office de chape, de deux parois latérales et d'une paroi arrière sensiblement verticale située du côté opposé au timon. Ledit timon s'étend à l'intérieur du boîtier de réglage à travers l'ouverture frontale dudit boîtier et est ainsi lié au boîtier par l'intermédiaire d'un pivot d'axe sensiblement vertical tourillonnant dans la plaque supérieure et la plaque inférieure au niveau de la partie frontale dudit boîtier. Le débattement latéral du timon autour de l'axe dudit pivot est limité par deux butées prévues de part et d'autre du boîtier de réglage sur les parois latérales de celui-ci. Derrière l'articulation du timon est implanté un deuxième pivot d'axe sensiblement parallèle au pivot du timon et tourillonnant également dans la plaque supérieure et la plaque inférieure du boîtier. Sur ce deuxième pivot est monté un organe de verrouillage comportant deux verrous destinés à immobiliser le timon dans l'une ou l'autre de ses deux positions extrêmes.

Dans cette machine agricole connue, les butées s'étendent certes à l'intérieur du boîtier de réglage. Il s'avère cependant qu'entre le timon et les butées et plus généralement entre le timon et les parois latérales apparaissent des zones de coincement où l'utilisateur ou tout autre personne risque d'être blessé lors du pivotement du timon.

D'une façon plus générale, de telles zones de coincement où l'utilisateur (ou tout autre personne) risque de se blesser, existent entre deux organes liés entre eux au moyen d'une articulation autorisant une rotation entre lesdits organes, cette rotation étant limitée dans au moins un sens par une butée destinée à venir en contact avec l'un desdits organes.

La présente invention a pour objectif d'éviter que l'utilisation (ou toute autre personne) ne se blesse.

A cet effet, la machine agricole selon l'invention est caractérisée par le fait que le dispositif de protection est lié au deuxième organe et entoure la butée liée au premier organe.

Dans un tel agencement, la zone où il pourrait y avoir une possibilité de coincement est tout simplement tenue hors de portée de l'utilisateur (ou de toute autre personne) ; il n'y a donc plus de risque de blessure.

Selon une caractéristique supplémentaire de l'invention, il est prévu que la rotation entre lesdits organes soit limitée, dans les deux sens, par une butée respective. Avantageusement, chaque butée pourra être formée par une extrémité longitudinale d'un support de butées. Dans une solution particulièrement intéressante, le support de butées est une portion de cylindre centrée au moins sensiblement sur l'axe géométrique de l'articulation liant les deux organes entre eux. Cela permet à l'extrémité correspondante du deuxième organe de tourner librement dans la cavité de la portion de cylindre sans empêcher la butée formée par chaque extrémité longitudinale du support de butées de venir en contact avec ledit deuxième organe.

Selon une autre caractéristique supplémentaire de l'invention, il est prévu que le dispositif de protection qui entoure et isole la (les) butée(s), comporte une portion de cylindre centrée au moins sensiblement sur l'axe géométrique de ladite articulation. De plus, cette portion de cylindre est liée, à chacune de ses extrémités longitudinales, au deuxième organe. Dans une solution particulièrement intéressante, le dispositif de protection est lié au deuxième organe par des vis. Le dispositif de protection reste ainsi amovible.

Dans une réalisation particulière, il est prévu que le dispositif de protection comporte en sus un couvercle.

Dans une autre réalisation très avantageuse, il est prévu que le premier organe comporte une chape entre les ailes de laquelle s'étendent au moins partiellement le deuxième organe, le support de butées et le dispositif de protection.

Selon une caractéristique supplémentaire de l'invention, il est prévu que l'un des organes soit un timon primaire et que l'autre organe soit un timon secondaire.

Selon une autre caractéristique supplémentaire de l'invention, il est prévu que l'un des organes soit un timon et que l'autre organe soit une partie du corps de la machine agricole.

Ces exemples de réalisation ne sont évidemment pas limitatifs.

D'autres caractéristiques de l'invention apparaissent dans la description suivante de trois exemples non limitatifs de réalisation selon l'invention, faite en référence au dessin annexé sur lequel :
- la figure 1 représente une vue latérale d'une machine agricole selon l'invention attelée à un tracteur agricole ;
- la figure 2 représente une vue de dessus de ladite machine agricole attelée au tracteur agricole ;
- la figure 3 représente une coupe partielle du timon primaire suivant le plan III-III de la figure 1 ;
- la figure 4 représente une coupe brisée (suivant la surface plane IV-IV de la figure 3) d'une partie du timon ;
- la figure 5 représente, en coupe partielle suivant le plan III-III de la figure 1, les positions extrêmes du timon primaire par rapport au timon secondaire ;
- la figure 6 représente une vue de dessus d'une autre machine agricole selon l'invention attelée à un tracteur agricole ;
- la figure 7 représente une vue latérale de la machine agricole de la figure 6 ;
- la figure 8 représente une liaison entre deux organes d'une autre machine agricole selon l'invention ;
- la figure 9 représente les positions extrêmes d'un organe de la liaison de la figure 8 par rapport à l'autre organe (le couvercle est démonté) ; et
- la figure 10 représente une coupe partielle (suivant le plan X-X de la figure 8) de ladite liaison.

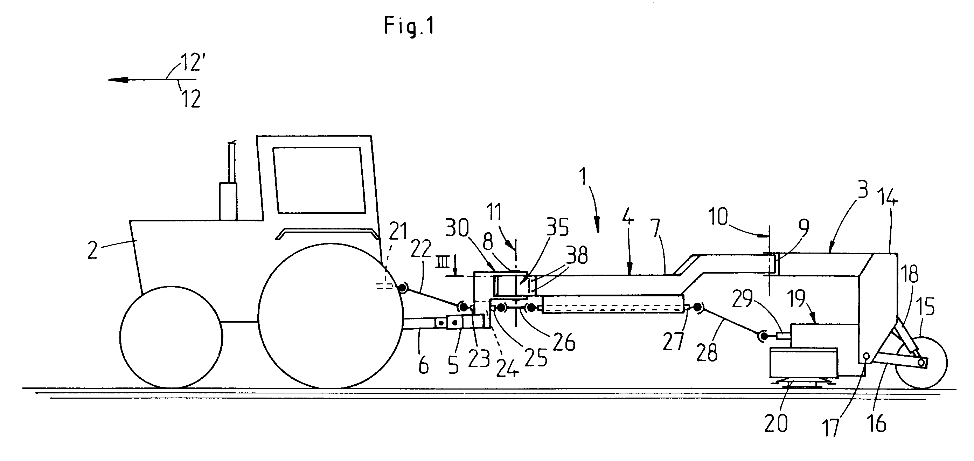

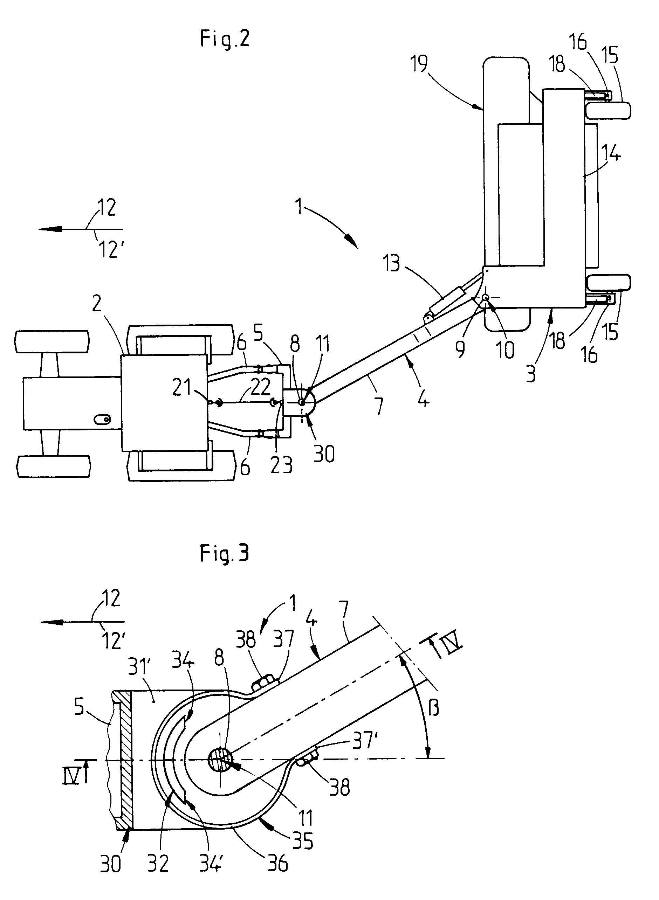

Les figures 1 et 2 montrent une faucheuse (1) selon l'invention. Celle-ci est attelée à un tracteur agricole (2).

Elle se compose d'un corps (3) et d'un timon (4). Le timon (4) comporte un timon primaire (5) destiné à être attelé aux bras inférieurs (6) de l'attelage du tracteur agricole (2), et un timon secondaire (7) lié au corps (3) de la faucheuse (1). Le timon primaire (5) est lié à l'extrémité frontale du timon secondaire (7) au moyen d'une articulation (8) qui autorise, dans cet exemple de réalisation selon l'invention, un pivotement du timon primaire (5) par rapport au timon secondaire (7) autour d'un axe géométrique (11) dirigé vers le haut. Le corps (3) de la faucheuse (1), quant à lui, s'étend transversalement à la direction d'avance (12) au travail. Il est lié plus précisément près d'une de ses extrémités longitudinales, à l'extrémité arrière du timon secondaire (7) au moyen d'une articulation (9) d'axe géométrique (10) au moins sensiblement vertical. La position angulaire du timon (4) par rapport au corps (3) peut être modifiée en faisant pivoter le timon secondaire (7) autour de l'axe géométrique (10) de l'articulation (9). La mise en position angulaire souhaitée et le maintien dans celle-ci sont réalisés par un vérin hydraulique (13). Grâce à cet agencement, le corps (3) de la faucheuse (1) peut s'étendre, dans cet exemple de réalisation, -vu de l'arrière dans la direction d'avance (12) au travail- soit à droite, soit dans le prolongement du tracteur agricole (2). Ceci autorise, par exemple, le fauchage à droite du tracteur agricole (2) ou le transport dans le prolongement de celui-ci.

Le corps (3) de la faucheuse (1) comporte un châssis (14) qui s'appuie sur le sol -notamment au travail- au moyen de deux roues (15) qui s'étendent chacune près d'une extrémité extérieure respective dudit châssis (14). Chaque roue (15) est liée au châssis (14) au moyen d'un bras de roue (16) lui-même lié audit châssis (14) au moyen d'une articulation du type pivot (17) d'axe géométrique dirigé au moins sensiblement perpendiculairement à la direction d'avance (12) au travail. Les axes géométriques des articulations (17) des deux roues (15) sont au moins sensiblement confondus. Entre chaque bras de roue (16) et le châssis (14) est par ailleurs prévu un vérin hydraulique (18) qui permet de faire pivoter le bras de roue (16) et la roue (15) correspondante par rapport au châssis (14) autour de l'axe géométrique de l'articulation (17) correspondante. Ceci permet au châssis (14) d'être approché du sol pendant la phase de fauchage et d'être éloigné du sol lorsque le fauchage est interrompu.

De plus, le corps (3) de la faucheuse (1) comporte un groupe d'organes de travail qui est constitué par un mécanisme de récolte (19) muni d'organes de coupe (20) et d'organes de traitement (non représentés) du produit coupé par les organes de coupe (20).

L'entraînement du mécanisme de récolte (19) est réalisé à partir de la prise de force (21) du tracteur agricole (2) qui attaque, par l'intermédiaire d'un arbre télescopique à joints universels (22), l'arbre d'entrée (23) d'un dispositif de transmission de mouvement (24) lié au timon primaire (5). L'arbre de sortie (25) du dispositif de transmission de mouvement (24) est orienté suivant la direction d'avance (12′) du tracteur agricole (2) et entraîne, au moyen d'un autre arbre télescopique à joints universels (26), un arbre de transmission (27). Celui-ci s'étend sous le timon secondaire (7) de façon sensiblement parallèle audit timon secondaire (7). Par ailleurs, l'axe longitudinal de l'arbre de transmission (27) ainsi que l'axe longitudinal de l'arbre de sortie (25) du dispositif de transmission de mouvement (24) et l'axe géométrique (11) de l'articulation (8) sont au moins sensiblement concourants. Cet agencement permet à l'arbre télescopique à joints universels (26), qui se situe sous ladite articulation (8) et dont les joints sont équidistants de l'axe géométrique (11) correspondant, d'entraîner de façon homocinétique l'arbre de transmission (27). Ce dernier transmet, par l'intermédiaire d'un autre arbre télescopique à joints universels (28), le mouvement de rotation à l'arbre d'entrée (29) du mécanisme de récolte (19). En position de travail (figures 1 et 2) c'est-à-dire lorsque la faucheuse (1) s'étend -vu de l'arrière- à droite du tracteur agricole (2), l'arbre de transmission (27) est orienté au moins sensiblement parallèlement à l'arbre d'entrée (29) du mécanisme de récolte (19). Cela permet d'entraîner de façon sensiblement homocinétique les organes de coupe (20) et les organes de traitement du produit coupé.

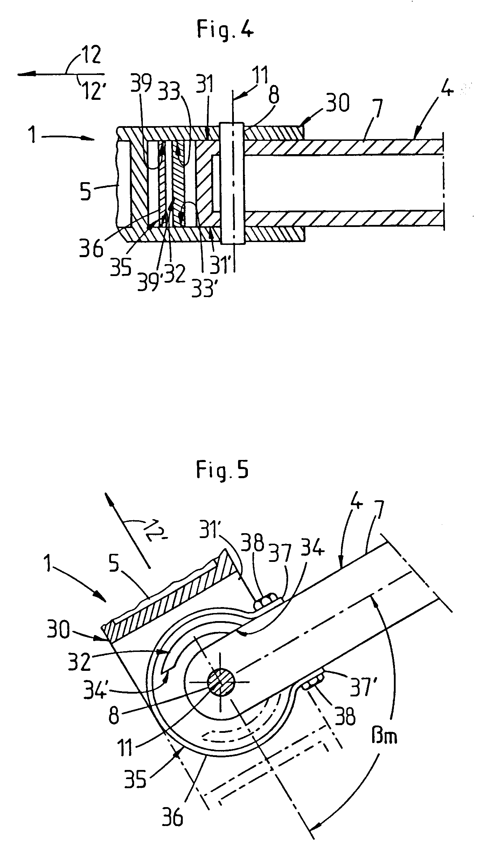

Les figures 3, 4 et 5 montrent plus précisément la liaison du timon primaire (5) avec le timon secondaire (7). Sur ces figures, il apparaît en particulier que le timon primaire (5) comporte une chape (30) dont les ailes (31, 31') sont dirigées au moins sensiblement horizontalement vers l'arrière par rapport au sens d'avance (12') du tracteur agricole (2). Entre ces ailes (31, 31') s'étend notamment l'extrémité frontale du timon secondaire (7) qui est traversée par l'axe d'articulation (8) de la chape (30). Un support de butées (32), constitué d'une portion de cylindre centrée sur l'axe géométrique (11) de l'articulation (8), s'étend également entre les ailes (31, 31') de la chape (30). Ce support de butées (32) est lié par chaque face (33, 33'), délimitant sa hauteur, à une aile (31, 31') respective de la chape (30) (figure 4). Par ailleurs, il apparaît sur les figures 3 et 5 que le support de butées (32) comporte à chacune de ses extrémités longitudinales une butée (34, 34') respective, destinée à venir en contact avec le timon secondaire (7). Un tel agencement permet de limiter l'angle de rotation (β) existant entre l'arbre de sortie (25) du dispositif de transmission (24) et l'arbre de transmission (27) du timon secondaire (7) à une valeur supportable pour l'arbre télescopique à joints universels (26) s'étendant sous l'articulation (8). De cette façon, lors d'un virage serré à droite ou à gauche, l'une des butées (34, 34') du support de butées (32) du timon primaire (5) vient s'appuyer contre le timon secondaire (7) limitant ainsi l'angle de rotation (β) du timon primaire (5) autour de l'axe géométrique (11) de l'articulation (8) à un angle de rotation maximum (βm).

Pour éviter que l'utilisateur (ou toute autre personne) ne se blesse lors des manoeuvres d'attelage ou de dépose de la faucheuse (1), un dispositif de protection (35) ne se déformant pas lors de ladite rotation isole les butées (34, 34'). A cet effet, le dispositif de protection (35) comporte une portion de cylindre (36) centrée sur l'axe géométrique (11) de l'articulation (8) et ayant une longueur et un rayon supérieurs à ceux du support de butées (32). Les extrémités longitudinales (37, 37') de la portion de cylindre (36) du dispositif de protection (35) sont montées chacune, d'une façon rigide mais néanmoins démontable, sur une face latérale respective du timon secondaire (7). Comme visible sur les figures 1, 3 et 5, cette liaison est assurée par deux vis (38) correspondantes qui lient chaque extrémité longitudinale (37, 37') du dispositif de protection (35) au timon secondaire (7). En sus, cette portion de cylindre (36) est aussi haute que le support de butées (32), de sorte que chaque face (39, 39') respective, délimitant la hauteur de ladite portion de cylindre (36), rejoigne une aile (31, 31') correspondante de la chape (30), isolant ainsi le support de butées (32) à l'intérieur d'un tronçon globalement cylindrique. De ce fait, le dispositif de protection (35) qui tourne avec le timon secondaire (7) par rapport au timon primaire (5), entoure complètement les butées (34, 34′), et cela quelle que soit la position angulaire -autorisée par lesdites butées (34, 34′)- du timon primaire (5) par rapport au timon secondaire (7).

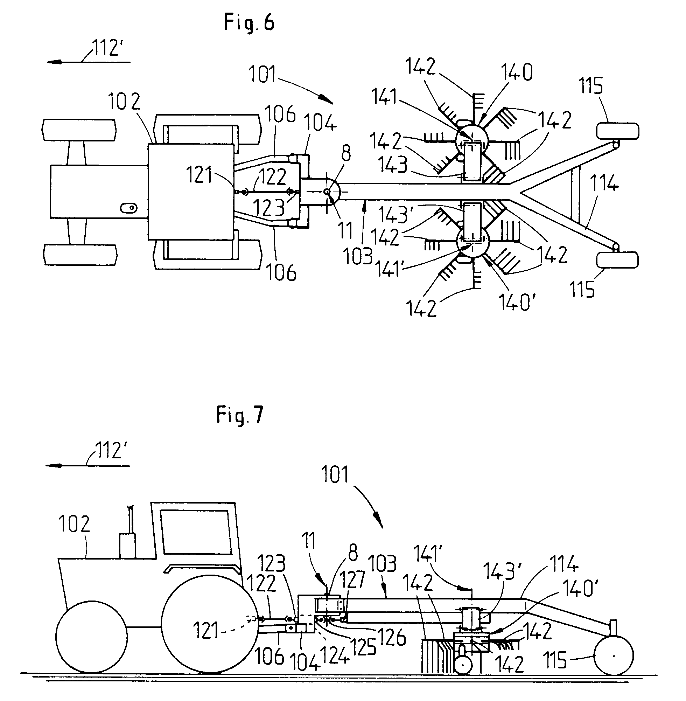

Les figures 6 et 7 montrent un autre exemple de réalisation d'une machine agricole selon l'invention. Dans cet exemple, la machine agricole est un andaineur (101) attelé à un tracteur agricole (102).

Il comporte un châssis (114) qui s'étend parallèlement à la direction d'avance au travail et qui est supporté à l'arrière par deux roues (115). A son extrémité frontale, le châssis (114) est lié à un timon (104) au moyen d'une articulation (8) identique à celle de la faucheuse (1) décrite précédemment, qui autorise un pivotement du timon (104) par rapport au châssis (114) suivant un axe géométrique (11) dirigé vers le haut. Le timon (104), quant à lui, est destiné à être attelé aux bras inférieurs (106) de l'attelage du tracteur agricole (102). De part et d'autre du châssis (114), s'étend un rotor (140, 140′) dont l'axe géométrique de rotation (141, 141′) est dirigé vers le haut et qui est muni à sa périphérie de bras de fourche (142) destinés à andainer le fourrage. La liaison de chaque rotor (140, 140′) avec le châssis (114) est réalisée par un bras de liaison (143, 143′) correspondant, permettant une adaptation individuelle des rotors (140, 140′) au relief du terrain. L'andaineur (101) peut ainsi ramener le fourrage de devant les rotors (140, 140') jusqu'au centre des deux rotors (140, 140') afin de constituer un andain. Le châssis (114) muni des roues (115) et supportant les deux rotors (140, 140') au moyen des bras de liaison respectifs (143, 143') constitue le corps (103) de l'andaineur (101).

D'une façon similaire à l'exemple de réalisation précédent, l'entraînement des rotors (140, 140') est réalisé à partir de la prise de force (121) du tracteur agricole (102) qui attaque, par l'intermédiaire d'un arbre télescopique à joints universels (122), l'arbre d'entrée (123) d'un dispositif de transmission de mouvement (124) lié au timon (104). L'arbre de sortie (125) du dispositif de transmission de mouvement (124) est également orienté suivant la direction d'avance (112') du tracteur agricole (102) et entraîne, au moyen d'un arbre télescopique à joints universels (126) implanté de manière identique à l'arbre (26) de l'exemple précédent, un arbre de transmission (127). Celui-ci s'étend sous le châssis (114) de façon sensiblement parallèle audit châssis (114) et est couplé avec un dispositif de renvoi d'angle (non représenté) qui entraîne, par l'intermédiaire d'un arbre télescopique à joints universels correspondant (non représenté), chaque rotor (140, 140').

La liaison du timon (104) avec le châssis (114) est identique par sa forme à celle décrite entre le timon primaire (5) et le timon secondaire (7) dans l'exemple de réalisation précédent. Le support de butées (32) et le dispositif de protection (35) sont également identiques par leur forme à ceux de la faucheuse (1) décrite précédemment. Pour cette raison, aucun de ces éléments ne sera redécrit.

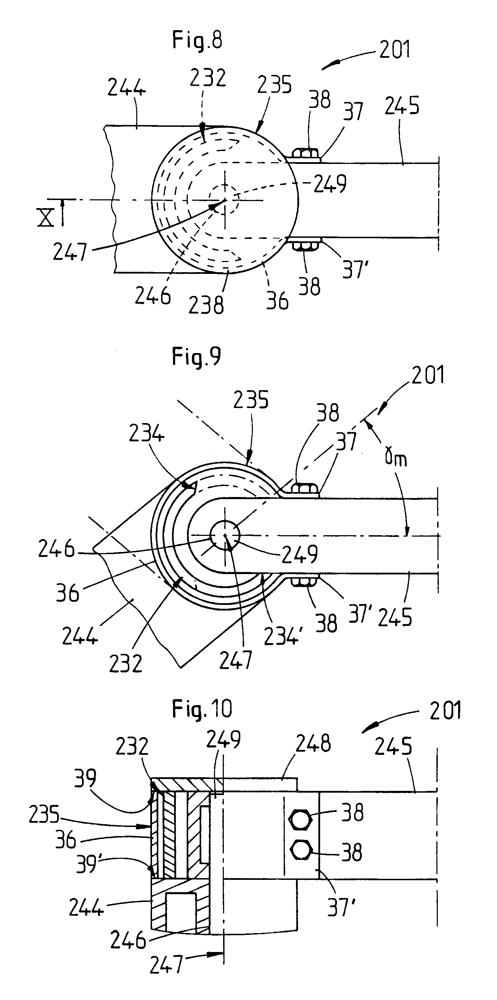

Les figures 8, 9 et 10 montrent deux organes (244, 245) d'un autre exemple de réalisation d'une machine agricole (201) selon l'invention.

Les deux organes (244, 245) sont liés entre eux au moyen d'une articulation (246) d'axe géométrique (247) autorisant une rotation entre lesdits organes (244, 245). Cette articulation (246) est réalisée grâce à un tourillon (249) lié rigidement à l'une de ses deux extrémités longitudinales au deuxième organe (245) et s'articulant à son autre extrémité longitudinale au premier organe (244). Par ailleurs, le premier organe (244) comporte un support de butées (232) constitué d'une portion de cylindre centrée sur ledit axe géométrique (247). Ce support de butées (232) comporte à chacune de ses extrémités longitudinales une butée (234, 234′) respective, destinée à venir en contact avec le deuxième organe (245). Un tel agencement permet, comme décrit dans les exemples de réalisation précédents, de limiter l'angle de rotation entre les deux organes (244, 245) à un angle de rotation maximum (γm).

Dans cet exemple de réalisation selon l'invention, un dispositif de protection (235) isole, comme dans les exemples de réalisation précédents,le support de butées (232). Ce dispositif de protection (235) comporte une portion de cylindre (36) et des vis (38) identiques par leur forme et leur agencement à ceux décrits dans les exemples précédents. En plus, le dispositif de protection (235) comporte un couvercle (248) qui est lié à la face (39) délimitant la hauteur de la portion de cylindre (36). De ce fait, le dispositif de protection (235) muni de son couvercle (248) entoure complètement les butées (234, 234').

Finalement, différentes modifications restent possibles notamment en ce qui concerne la constitution des divers éléments ou par substitution d'équivalents techniques, sans pour autant sortir du domaine de protection défini par les revendications. C'est ainsi notamment, que dans les exemples de réalisation décrits, il est parfaitement possible de remplacer la liaison cylindrique (8 ; 246) ou/et le support de butées (32 ; 232) ou/et le dispositif de protection (35 ; 235) par des éléments de formes différentes et plus particulièrement par des éléments de forme sphérique.

## Revendications

1. Machine agricole (1 ; 101 ; 201) comportant :
a) un premier et un deuxième organe (5, 7 ; 104, 103 ; 244, 245) liés entre eux au moyen d'une articulation (8 ; 246) autorisant une rotation entre ces deux organes (5, 7 ; 104, 103 ; 244, 245), cette rotation étant limitée dans au moins un sens par une butée (34, 34' ; 234, 234') liée au premier organe (5 ; 104 ; 244) et destinée à venir en contact avec le deuxième organe (7 ; 103 ; 245) ;
et
b) un dispositif de protection (35 ; 235) isolant ladite butée (34, 34' ; 234, 234') et ne se déformant pas lors de ladite rotation,
caractérisée par le fait que ledit dispositif de protection (35 ; 235) est lié au deuxième organe (7 ; 103 ; 245) et entoure ladite butée (34, 34' ; 234, 234') liée au premier organe (5 ; 104 ; 244).

2. Machine agricole selon la revendication 1, caractérisée par le fait que la rotation est limitée, dans les deux sens, par une butée respective (34, 34' ; 234, 234').

3. Machine agricole selon la revendication 2, caractérisée par le fait que chaque butée (34, 34' ; 234, 234') est formée par une extrémité longitudinale d'un support de butées (32 ; 232).

4. Machine agricole selon la revendication 3, caractérisée par le fait que le support de butées (32 ; 232) est une portion de cylindre centrée au moins sensiblement sur l'axe géométrique (11 ; 247) de ladite articulation (8 ; 247).

5. Machine agricole selon l'une au moins des revendications 1 à 4, caractérisée par le fait que le dispositif de protection (35 ; 235) comporte une portion de cylindre (36) centrée au moins sensiblement sur l'axe géométrique (11 ; 247) de ladite articulation (8 ; 246).

6. Machine agricole selon la revendication 5, caractérisée par le fait que la portion de cylindre (36) est liée, à chacune de ses extrémités longitudinales, au deuxième organe (7 ; 103 ; 245).

7. Machine agricole selon l'une des revendications 5 ou 6, caractérisée par le fait que le dispositif de protection (35 ; 235) est lié au deuxième organe (7 ; 103 ; 245) par des vis (38).

8. Machine agricole selon l'une au moins des revendications 5 à 7, caractérisée par le fait que le dispositif de protection (235) comporte en sus un couvercle (248).

9. Machine agricole selon l'une au moins des revendications 1, 2, 4 à 8 prise en combinaison avec la revendication 3, caractérisée par le fait que le premier organe (5 ; 104) comporte une chape (30) entre les ailes (31, 31') de laquelle s'étendent au moins partiellement le deuxième organe (7 ; 103), le support de butées (32) et le dispositif de protection (35).

10. Machine agricole selon la revendication 9, caractérisée par le fait que le support de butées (32) est lié aux deux ailes (31, 31') de la chape (30).

11. Machine agricole selon la revendication 9 ou 10, caractérisée par le fait que le dispositif de protection (35) s'étend sur toute la hauteur entre les deux ailes (31, 31') de la chape (30) tout en pouvant tourner à l'intérieur de cette dernière.

12. Machine agricole selon l'une au moins des revendications 1 à 11, caractérisée par le fait que l'un des organes (5, 7 ; 244, 245) est un timon primaire et que l'autre organe est un timon secondaire.

13. Machine agricole selon l'une au moins des revendications 1 à 11, caractérisée par le fait que l'un des organes (104, 103 ; 244, 245) est un timon et que l'autre organe est une partie du corps de la machine agricole (101 ; 201).

## Claims

1. Agricultural machine (1; 101; 201) comprising:
a) a first and a second element (5, 7; 104, 103; 244, 245) connected to each other through an articulation (8; 246) permitting a rotation between these two elements (5, 7; 104, 103; 244, 245), said rotation being limited in at least one direction by means of a stop (34, 34'; 234, 234') connected to the first element (5; 104; 244) and intended to come into contact with the second element (7; 103; 245);
and
b) a protective device (35; 235) isolating the said stop (34, 34'; 234, 234') and which does not be deformed during the said rotation,
characterised in that the said protective device (35; 235) is connected to the second element (7; 103; 245) and surrounds the said stop (34, 34'; 234, 234') connected to the first element (5; 104; 244).

2. Agricultural machine in accordance with claim 1, characterised in that the rotation is limited, in the two directions, by a respective stop (34, 34'; 234, 234').

3. Agricultural machine in accordance with claim 2, characterised in that each stop (34, 34'; 234, 234') is formed by a longitudinal end of a support (32; 232) of stops.

4. Agricultural machine in accordance with claim 3, characterised in that the support (32; 232) of stops is a cylinder portion centered at least approximately on the geometrical axis (11; 247) of the said articulation (8; 247).

5. Agricultural machine in accordance with one at least of claims 1 to 4, characterised in that the protective device (35; 235) comprises a cylinder portion (36) centered at least approximately on the geometrical axis (11; 247) of the said articulation (8; 246).

6. Agricultural machine in accordance with claim 5, characterised in that the cylinder portion (36) is connected, at each of its longitudinal ends, to the second element (7; 103; 245).

7. Agricultural machine in accordance with claim 5 or 6, characterised in that the protective device (35; 235) is connected to the second element (7; 103; 245) by means of screws (38).

8. Agricultural machine in accordance with one at least of claims 5 to 7, characterised in that the protective device (235) additionally comprises a cover (248).

9. Agricultural machine in accordance with one at least of claims 1, 2, 4 to 8 in its dependence on claim 3, characterised in that the first element (5; 104) comprises a yoke (30) between the flanges (31, 31') of which the second element (7; 103), the support (32) of stops and the protective device (35) extend at least partially.

10. Agricultural machine in accordance with claim 9, characterised in that the support (32) of stops is connected to the flanges (31, 31') of the yoke (30).

11. Agricultural machine in accordance with claim 9 or 10, characterised in that the protective device (35) extends on the complete height between the two flanges (31, 31') of the yoke (30) and is able to turn inside this latter.

12. Agricultural machine in accordance with one at least of claims 1 to 11, characterised in that one of the elements (5, 7; 244, 245) is a primary tongue and the other element is a secondary tongue.

13. Agricultural machine in accordance with one at least of claims 1 to 11, characterised in that one of the elements (104, 103; 244, 245) is a tongue and the other element is a part of the body of the agricultural machine (101; 201).

## Patentansprüche

1. Landmaschine (1; 101 ; 201), welche
a) ein erstes und ein zweites Organ (5, 7 ; 104, 103; 244, 245), die miteinander mittels eines Gelenks (8 ; 246), das eine Rotation zwischen diesen beiden Organen (5, 7 ; 104, 103 ; 244, 245) gestattet, verbunden sind, welche Rotation zumindest in einer Richtung durch einen Anschlag (34, 34' ; 234, 234') begrenzt ist, der mit dem ersten Organ (5 ; 104 ; 244) verbunden ist und dazu bestimmt ist, mit dem zweiten Organ (7 ; 103 ; 245) in Berührung zu kommen ;
und
b) eine Schutzvorrichtung (35 ; 235), die den Anschlag (34, 34' ; 234, 234') abschirmt und sich bei der Rotation nicht verformt,
umfasst,
dadurch gekennzeichnet, dass diese Schutzvorrichtung (35 ; 235) mit dem zweiten Organ (7 ; 103 ; 245) verbunden ist und den Anschlag (34, 34' ; 234, 234'), der mit demersten Organ (5 ; 104 ; 244) verbunden ist, umschliesst.

2. Landmaschine nach Anspruch 1, dadurch gekennzeichnet, dass die Rotation in die beiden Richtungen durch einen entsprechenden Anschlag (34, 34' . 234, 234') begrenzt ist.

3. Landmaschine nach Anspruch 2, dadurch gekennzeichnet, dass jeder Anschlag (34, 34' ; 234, 234') durch ein Längsende einer Anschlagstütze (32 ; 232) gebildet ist.

4. Landmaschine nach Anspruch 3, dadurch gekennzeichnet, dass die Anschlagstütze (32 ; 232) ein Zylinderteil ist, der zumindest im wesentlichen um die geometrische Achse (11 ; 247) des Gelenks (8 ; 247) zentriert ist.

5. Landmaschine nach mindestens einem der Ansprüche 1 bis 4, dadurch gekennzeichnet, dass die Schutzvorrichtung (35 ; 235) einen Zylinderteil (36) aufweist, der zumindest im wesentlichen um die geometrische Achse (11 ; 247) des Gelenks (8 ; 246) zentriert ist.

6. Landmaschine nach Anspruch 5, dadurch gekennzeichnet, dass der Zylinderteil (36) an jedem seiner Längsenden mit dem zweiten Organ (7 ; 103 ; 245) verbunden ist.

7. Landmaschine nach Anspruch 5 oder 6, dadurch gekennzeichnet, dass die Schutzvorrichtung (35 ; 235) mit dem zweiten Organ (7 ; 103 ; 245) durch Schrauben (38) verbunden ist.

8. Landmaschine nach mindestens einem der Ansprüche 5 bis 7, dadurch gekennzeichnet, dass die Schutzvorrichtung (235) noch einen Deckel (248) aufweist.

9. Landmaschine nach mindestens einem der Ansprüche 1, 2, 4 bis 8, in Kombination mit Anspruch 3, dadurch gekennzeichnet, dass das erste Organ (5 ; 104) ein Gabelgelenkstück (30) aufweist, zwischen dessen Flügel (31, 31') sich zumindest teilweise das zweite Organ (7 ; 103), die Anschlagstütze (32) und die Schutzvorrichtung (35) ertrecken.

10. Landmaschine nach Anspruch 9 dadurch gekennzeichnet, dass die Anschlagstütze (32) mit den beiden Flügeln (31, 31') des Gabelgelenkstücks (30) verbunden ist.

11. Landmaschine nach Anspruch 9 oder 10, dadurch gekennzeichnet, dass die Schutzvorrichtung (35) sich über die ganze Höhe zwischen den beiden Flügeln (31, 31') des Gabelgelenkstücks (30) erstreckt, wobei sie sich im Inneren des letzteren drehen kann.

12. Landmaschine nach mindestens einem der Ansprüche 1 bis 11, dadurch gekennzeichnet, dass das eine der Organe (5, 7 ; 244, 245) eine Primärdeichsel ist und dass das andere Organ eine Sekundärdeichsel ist.

13. Landmaschine nach mindestens einem der Ansprüche 1 bis 11, dadurch gekennzeichnet, dass das eine der Organe (104, 103 ; 244, 245) eine Deichsel ist und dass das andere Organ ein Teil des Körpers der Landmaschine (101 ; 201) ist.
